(19) Europäisches Patentamt
European Patent Office
Office européen des brevets

(11) **EP 4 492 877 A1**

(12) **EUROPEAN PATENT APPLICATION**

(43) Date of publication:
**15.01.2025 Bulletin 2025/03**

(21) Application number: **24179198.7**

(22) Date of filing: **31.05.2024**

(51) International Patent Classification (IPC):
**H04W 52/36** (2009.01)   **H04W 4/40** (2018.01)
**H04W 52/38** (2009.01)   **H04W 76/14** (2018.01)
**H04W 92/18** (2009.01)

(52) Cooperative Patent Classification (CPC):
**H04W 52/367; H04W 4/40; H04W 52/383;
H04W 76/14; H04W 92/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023  US 202363526779 P
23.02.2024  US 202418585840**

(71) Applicant: **Meta Platforms Technologies, LLC
Menlo Park, CA 94025 (US)**

(72) Inventors:
• **Lim, Suhwan
  Menlo Park (US)**
• **Wong, Curt
  Menlo Park (US)**
• **Ji, Zhu
  Menlo Park (US)**

(74) Representative: **Murgitroyd & Company
Murgitroyd House
165-169 Scotland Street
Glasgow G5 8PL (GB)**

(54) **SYSTEMS AND METHODS FOR WIRELESS SIDELINK OPERATIONS**

(57)   Systems, methods, and devices for wireless sidelink operations may include a first device including a transceiver and one or more processors configured to configure a transmission power for a wireless sidelink (SL) transmission of a SL connection with a second device, where the transmission power is configured to be greater than a minimum transmission power. The one or more processors may transmit, via the transceiver, the wireless SL transmission to the second device according to the configured transmission power.

FIG. 5

**Description**

**FIELD OF DISCLOSURE**

The present disclosure is generally related to wireless communication between devices, including but not limited to, systems and methods for wireless sidelink operations.

**BACKGROUND**

Augmented reality (AR), virtual reality (VR), and mixed reality (MR) are becoming more prevalent, which such technology being supported across a wider variety of platforms and device. Some AR/VR/MR devices may communicate with other devices within an environment via respective sidelink communication channels.

**SUMMARY**

In one aspect, this disclosure is directed to a method. The method include configuring, by a first wireless communication device, a transmission power for a wireless sidelink (SL) transmission of a SL connection with a second wireless communication device. The transmission power is configured to be greater than a minimum transmission power. The method furtherincludes transmitting, by the first wireless communication device, the wireless SL transmission to the second wireless communication device according to the configured transmission power.

In some embodiments, the SL connection is at least one of a SL-unlicensed (SL-U) or a SL-carrier aggregation (SL-CA) connection. In some embodiments, the transmission power includes a SL transmission power, and a maximum output power of the first wireless communication device is (computed as) a function of the SL transmission power and a new radio (NR) transmission power. In some embodiments, the first wireless communication device includes a reduced capability (redcap) device. In some embodiments, the first wireless communication device configures the transmission power to be greater than the minimum transmission power and less than a maximum transmission power. In some embodiments, the first wireless communication device transmits the SL transmission to the second wireless communication device at the transmission power, which is less than the maximum transmission power.

In some embodiments, one of the first wireless communication device or the second wireless communication device is/comprises (or is part of) a vehicle, and another one of the first wireless communication device or the second wireless communication device is or comprises a user device of a pedestrian. In some embodiments, the method includes establishing, by the first wireless communication device, the SL connection with the second wireless communication device, in an unlicensed frequency band. In some embodiments, the method includes establishing, by the first wireless communication device, a cellular connection with a base station in a licensed frequency band. The first wireless communication device may co-operate the SL connection in the unlicensed frequency band and the cellular connection in the licensed frequency band. In some embodiments, configuring the transmission power for the wireless SL transmission includes configuring, by the first wireless communication device, a maximum output power of the first wireless communication device, to be between a lower transmission power and an upper transmission power, for a first slot of the SL connection which overlaps, in time domain, with a second slot of the cellular connection.

In another aspect, this disclosure is directed to a first device including a transceiver and one or more processors configured to configure a transmission power for a wireless sidelink (SL) transmission of a SL connection with a second device, where the transmission power is configured to be greater than a minimum transmission power. The one or more processors are further configured to transmit, via the transceiver, the wireless SL transmission to the second device according to the configured transmission power.

In some embodiments, the SL connection is at least one of a SL-unlicensed (SL-U) or a SL-carrier aggregation (SL-CA) connection. In some embodiments, the transmission power comprises a SL transmission power, and a maximum output power of the wireless communication device is (e.g., computed as) a function of the SL transmission power and a new radio (NR) transmission power. In some embodiments, the first device comprises a reduced capability device. In some embodiments, the one or more processors configure the transmission power to be greater than the minimum transmission power and less than a maximum transmission power. In some embodiments, the one or more processors transmit the SL transmission to the second device at the transmission power, which is less than the maximum transmission power.

In some embodiments, one of the first device or the second device comprises a vehicle, and another (or a remaining) one of the first device or the second device comprises a user device of a pedestrian. In some embodiments, the one or more processors are further configured to establish, via the transceiver, the SL connection with the second device, in an unlicensed frequency band. In some embodiments, the one or more processors are further configured to establish, via the transceiver, a cellular connection with a base station, where the first device co-operates the SL connection in the unlicensed frequency band and the cellular connection in the licensed frequency band. In some embodiments, the first device configures a maximum output power of the first wireless communication device, to be between a lower transmission power and an upper transmission power, for a first slot of the SL connection which overlaps, in time domain, with a second slot of the cellular connection.

## BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.

FIG. 1 is a diagram of an example wireless communication system, according to an example implementation of the present disclosure.

FIG. 2 is a diagram of a console and a head wearable display for presenting augmented reality or virtual reality, according to an example implementation of the present disclosure.

FIG. 3 is a diagram of a head wearable display, according to an example implementation of the present disclosure.

FIG. 4 is a block diagram of a computing environment according to an example implementation of the present disclosure.

FIG. 5 is a block diagram of a system for wireless sidelink operations, according to an example implementation of the present disclosure.

FIG. 6 is a timing diagram showing slots of a plurality of connections maintained by a device of the system of FIG. 5, according to an example implementation of the present disclosure.

FIG. 7 is a flowchart showing an example method for wireless sidelink operations, according to an example implementation of the present disclosure.

## DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

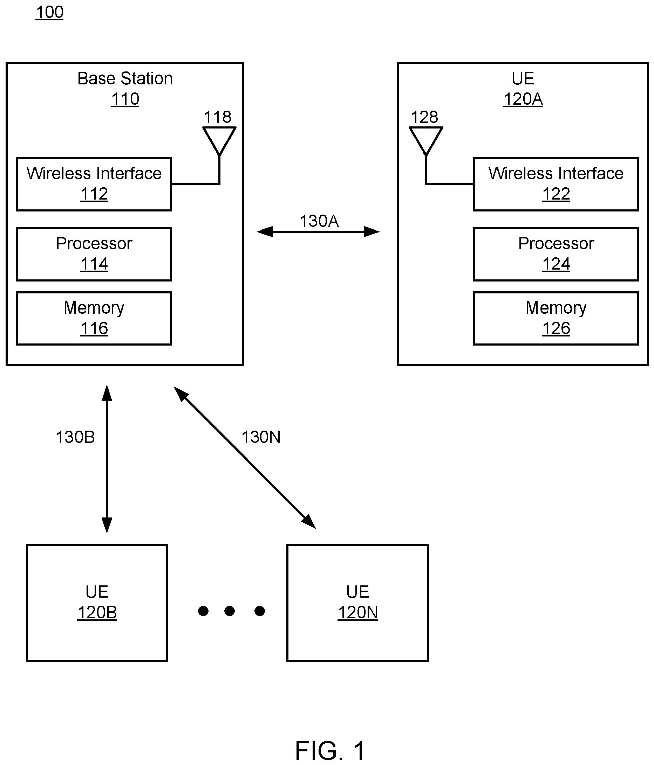

FIG. 1 illustrates an example wireless communication system 100. The wireless communication system 100 may include a base station 110 (also referred to as "a wireless communication node 110" or "a station 110") and one or more user equipment (UEs) 120 (also referred to as "wireless communication devices 120" or "terminal devices 120"). The base station 110 and the Ues 120 may communicate through wireless commination links 130A, 130B, 130C. The wireless communication link 130 may be a cellular communication link conforming to 3G, 4G, 5G or other cellular communication protocols or a Wi-Fi communication protocol. In one example, the wireless communication link 130 supports, employs or is based on an orthogonal frequency division multiple access (OFDMA). In one aspect, the Ues 120 are located within a geographical boundary with respect to the base station 110, and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

In some embodiments, the UE 120 may be a user device such as a mobile phone, a smart phone, a personal digital assistant (PDA), tablet, laptop computer, wearable computing device, etc. Each UE 120 may communicate with the base station 110 through a corresponding communication link 130. For example, the UE 120 may transmit data to a base station 110 through a wireless communication link 130, and receive data from the base station 110 through the wireless communication link 130. Example data may include audio data, image data, text, etc. Communication or transmission of data by the UE 120 to the base station 110 may be referred to as an uplink communication. Communication or reception of data by the UE 120 from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120 may include an electronic display and/or an input device. For example, the UE 120 may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126, and executes the instructions. In one aspect, the processor 124 may receive downconverted data at the baseband frequency from the wireless interface 122, and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency, and encode or process the data. For example, the processor 124 may encode or process image data or audio data at the baseband frequency, and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the Ues 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120. Additionally or alternatively, the base station 110 may provide data to another UE 120, another base station, or another communication device. Hence, the base station 110 allows communication among Ues 120 associated with the base station 110, or other Ues associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120 through a wireless communication link 130. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116, and executes the instructions. In one aspect, the processor 114 may receive downconverted data at the baseband frequency from the wireless interface 112, and decode or process the downconverted data. For example, the processor 114 may generate audio data or image data according to the downconverted data. In one aspect, the processor 114 may generate or obtain data for transmission at the baseband frequency, and encode or process the data. For example, the processor 114 may encode or process image data or audio data at the baseband frequency, and provide the encoded or processed data to the wireless interface 112 for transmission. In one aspect, the processor 114 may set, assign, schedule, or allocate communication resources for different Ues 120. For example, the processor 114 may set different modulation schemes, time slots, channels, frequency bands, etc. for Ues 120 to avoid interference. The processor 114 may generate data (or UL CGs) indicating configuration of communication resources, and provide the data (or UL CGs) to the wireless interface 112 for transmission to the Ues 120.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120 is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

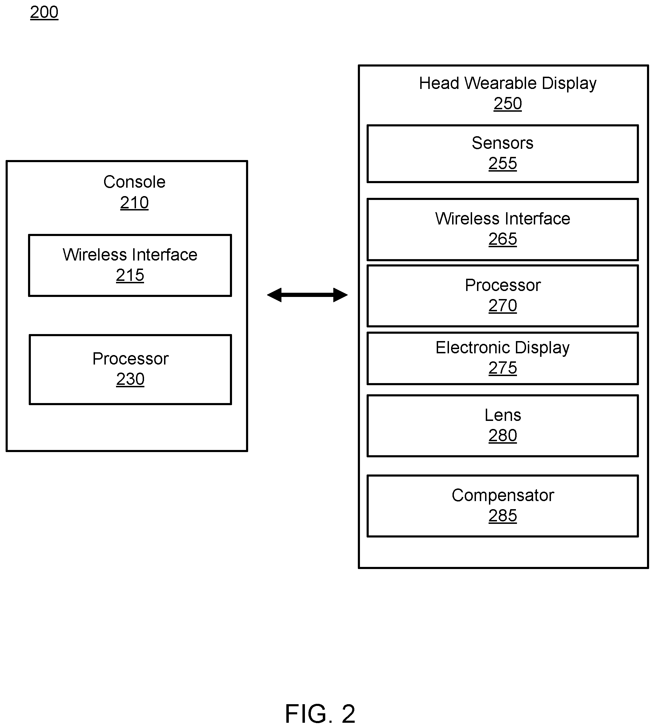

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120. The HWD 250 may be referred to as, include, or be part of a head mounted display (HMD), head mounted device (HMD), head wearable device (HWD), head worn display (HWD) or head worn device (HWD). The HWD 250 may detect its location and/or orientation of the HWD 250 as well as a shape, location, and/or an orientation of the body/hand/face of the user, and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality, and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250, and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement, and determine an orientation and location of the HWD 250. In one aspect, the sensors 255 can detect the translational movement and the rotational movement with respect to a previous orientation and location of the HWD 250, and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye, and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image, and render the image to display through the electronic display 275. In some embodiments, the image data from the console 210 may be encoded, and the processor 270 may decode the image data to render the image. In some embodiments, the processor 270 receives, from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements, and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275, and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250, and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space, and determines a view of the artificial reality space along a direction corresponding to the mapped orientation from the mapped location in the artificial reality space. The processor 230 may generate image data describing an image of the determined view of the artificial reality space, and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image, and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250, and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

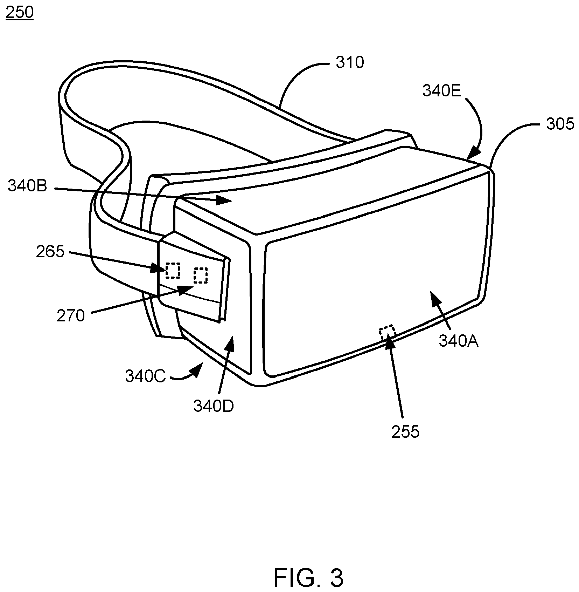

FIG. 3 is a diagram of a HWD 250, in accordance with an example embodiment. In some embodiments, the HWD 250 includes a front rigid body 305 and a band 310. The front rigid body 305 includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205, and may not be visible externally. In other embodiments, the HWD 250 has a different configuration than shown in FIG. 3. For example, the wireless interface 265, the processor 270, and/or the sensors 255 may be in different locations than shown in FIG. 3.

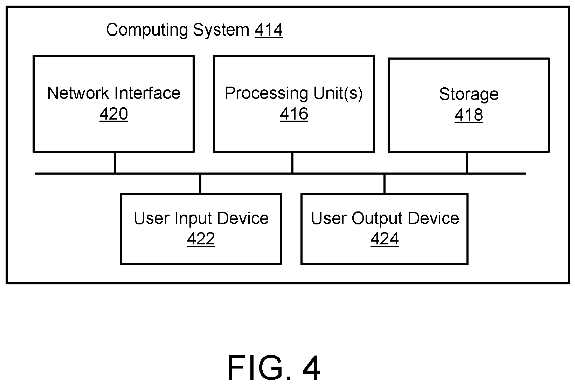

Various operations described herein can be implemented on computer systems. FIG. 4 shows a block diagram of a representative computing system 414 usable to implement the present disclosure. In some embodiments, the source devices 110, the sink device 120, the console 210, the HWD 250 are implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

Disclosed herein are related to systems and methods for performing sidelink (SL) operations. Sidelink operations may be described in various standards requests, for supporting sidelink-carrier aggregation (CA) in an intelligent transportation system (ITS) spectrum. For example, some implementations may include support for LTE SL-CA features for new radio (e.g., SL carrier (re-)selection, synchronization of aggregated carriers, power control for simultaneous SL transmission, packet duplication, etc. However, such implementations may be limited to intra-band CA for the ITS band in frequency 1 band (e.g., Band n47). In other implementation, SL-CA may also be only focused on the ITS spectrum (e.g., NR band n47 or LTE band 47). For example, a radio access network (RAN) WG may support a single carrier SL-U (e.g., with up to a 100MHz channel bandwidth) on various unlicensed bands (e.g., n46/n96/n102). It may be beneficial to support SL-U for single carrier, since unlicensed new radio (NR-U) may support the single carrier operation in the unlicensed band in previous releases, thus SL-u CA in unlicensed bands may be supported. Some implementations may incorporate/support an enhanced sidelink operation in FR2 licensed spectrum (e.g., RAN1/RAN2). For instance, some of these implementation may involve supporting SL beam management (e.g., initial beam-pairing, beam maintenance, beam failure recovery, etc.) by reusing existing SL CSI framework and/or reusing Uu beam management concepts. Some implementations may also include/consider UE transmission and reception radio frequency requirements for supporting new features, sidelink frequency bands for single carrier operations, and for carrier aggregation operations.

According to the systems and methods described herein, the present solution may define particular SL features for RF requirements. The features may be related to certain example RF architectures for user equipment. One feature may include SLU operation in a single carrier up to 100MHz channel bandwidth. Another feature may include inter-band concurrent SL-U operation in both licensed and unlicensed bands. Inter-band concurrent SL-U operation may be implemented with licensed (Uu) and unlicensed band (SL) combination, where individual RF requirements may be applied for this feature. Another feature may include SL-CA operation in the ITS spectrum. Yet another feature may include reduced capability SL-U user equipment (UE) support, where NR-U power class may be supported (e.g., from 14dBm to 23dBm), or a variable power class for SL-U similar to NR-U.

In various implementations of cellular communications, a cellular device may often transmit communications / PDUs / packets / signals at a maximum transmit power. However, in sidelink (SL) communications, using the maximum transmit power may not be efficient for the device. For example, transmitting at maximum transmit power may lead to additional interference and increased power consumption, particularly when SL communications are more localized. For instance, transmitting at maximum transmit power for a SL communication can result in increased interference for other devices, even though the SL communication session is relatively local between two nearby devices. Additionally, transmitting at maximum transmit power for a SL communication can result in greater power consumption than which is needed, because the SL communication session is relatively local. However, no current standards may set a minimum transmit power for SL communications.

In various embodiments, a first wireless communication device in a sidelink (SL) communication session or connection with a second wireless communication device, may be configured to establish, determine, set, or otherwise configure a transmission power for a wireless SL transmission of the SL connection with the second wireless communication device. The first wireless communication device may configure the transmission power to be greater than a minimum SL power transmission. The first wireless communication device may transmit the SL transmission according to the configured transmission power.

According to the various implementations of the present solution, the systems and methods described herein may decrease interference and conserve power by devices, by ensuring the transmission power is configured to be greater than a minimum SL power transmission. In this regard, a device may configure the transmission power to be greater than the minimum SL power transmission, but in some instances less than a maximum transmission power.

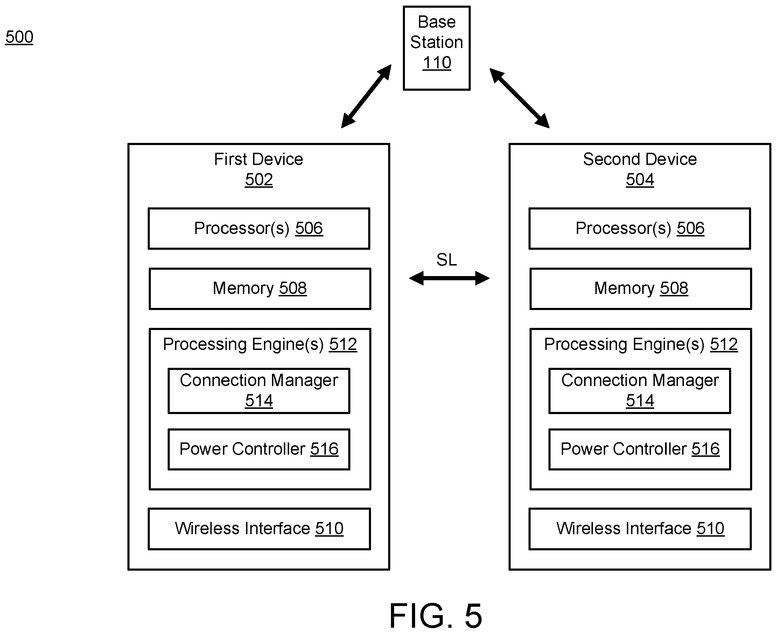

Referring now to FIG. 5, depicted is a block diagram of a system 500 for wireless sidelink operations, according to an example implementation of the present disclosure. The system 500 may include a first device 502 and a second device 504. In various embodiments, the first device 502 and second device 504 may be configured to establish or maintain a sidelink (SL) connection (denoted as SL in FIG. 5). The first device 502 may be configured to configure a transmission power for a wireless SL transmission of the SL connection with the second device 504, where the transmission power is greater than a minimum SL power transmission. The first device 502 may be configured to communicate, send, or otherwise transmit the wireless SL transmission to the second device 504, according to the configured transmission power.

The first device 502 and second device 504 may be similar to the devices, components, elements, or hardware described above. In various embodiments, the first device 502 and/or second device 504 may be a reduced capability (RedCap) device. For example, the first device 502 may be a wearable device. In some embodiments, the first device 502 and second device 504 may be or include devices which provide an extended reality (XR) environment to a user. For example, the first device 502 may be a head wearable device, and the second device 504 may be a console. In some embodiments, the first device 502 may be a device of one user, and the second device 504 may be a device of another user. For example, the first device 502 may be a device corresponding to a vehicle (e.g., an automobile, a bicycle, a motorcycle, a bus) and the second device 504 may be a device of a user (e.g., a pedestrian).

The first device 502 and second device 504 may include one or more processors 506 and memory 508. The processor(s) 506 may be similar to the processors 114, 124 of FIG. 1, the processor(s) 230, 270 of FIG. 2 and FIG. 3, and/or processing units 416 of FIG. 4. The memory 508 may be similar to the memory 116, 126 of FIG. 1 and/or storage 418 of FIG.

4. The first device 502 and second device 504 may include a wireless interface 510, which may be similar to the wireless interfaces 112, 122, 215, 265 of FIG. 1 - FIG 3 and/or the network interface 420 of FIG. 4.

The first device 502 and second device 504 may include one or more processing engines 512. The processing engine(s) 512 may be or include any device, component, element, or hardware designed or configured to perform various functions of the device. While shown as embodied on the respective devices 502, 504, in various embodiments, the processing engine(s) 512 may be or include hardware of the wireless interface 510. The processing engine(s) 512 may include a connection manager 514 and a power controller 516. While these two processing engine(s) 512 are shown and described, in various embodiments, additional processing engines 512 may be implemented at the device 502, 504 and/or in the wireless interface 510. Further, and in various embodiments, one or more processing engines 512 may be combined with another processing engine 512. Additionally or alternatively, one processing engine 512 may be divided into multiple processing engines 512.

The devices 502, 504 may include a connection manager 514. The connection manager 514 may be or include any device, component, element, or hardware designed or configured to establish, generate, maintain, or otherwise manage various connections (e.g., wireless connections) with one or more endpoints or nodes. In some embodiments, the connection manager 514 may be configured to manage sidelink connections between the first device 502 and second device, and manage uplink/downlink (e.g., non-sidelink) cellular connections between the respective device 502, 504 and a base station 110. In this regard, the connection manager 514 may be configured to manage device-to-device connections as well as device-to-network (or device-to-base station) connections.

The connection manager 514 may be configured to generate, create, or otherwise establish a sidelink (SL) connection between the first device 502 and the second device 504. In some embodiments, the connection manager 514 may be configured to establish the SL connection, by performing device discovery and proximity detection. For example, the connection manager 514 of the first device 502 may be configured to broadcast (e.g., via the wireless interface 510) a discovery signal, and the connection manager 514 of the second device 504 may be configured to detect the discovery signal from the first device 502. The connection managers 514 may be configured to determine a proximity between the devices 502, 504 (e.g., based on a signal strength of the discovery signal sent by the first device 502, and received by the second device 504 in the above example). The connection manager 514 may be configured to perform various additional steps, such as permission and authentication, as may be needed to establish the SL connection.

The connection manager 514 may be configured to determine allocated resources for the SL connection. For example, the connection manager 514 may be configured to determine resources allocated by the base station 110 or core network, for the sidelink connection. In some embodiments, the allocated resources may be or include a particular frequency or frequency range, particular time slots, etc. In some embodiments, the allocated resources may include a frequency in an unlicensed frequency band. For example, the unlicensed frequency band may be or include n46, n96, n102. In some examples, the unlicensed frequency band may include frequency ranges between 5.925 gigahertz (GHz) to 7.125 GHz. The connection manager 514 may be configured to receive allocated resources from the base station 110 or core network, including a particular frequency or frequency range, in which to establish the SL connection between the first device 502 and second device 504.

The connection manager 514 may be configured to generate, maintain, or otherwise establish the SL connection according to the allocated resources (e.g., from the base station or core network). In some embodiments, the connection manager 514 may be configured to establish the SL connection in the unlicensed frequency band. For example, where the allocated resources include a particular frequency or frequency band within the unlicensed frequency band, the connection manager 514 may be configured to establish the SL connection in the unlicensed frequency band.

In some embodiments, the connection manager 514 may be configured to establish the SL connection as a SL-unlicensed (SL-U) connection and/or a SL-carrier aggregation (SL-CA) connection. The SL-U connection may be or include a SL connection which is within the unlicensed frequency band. The SL-CA connection may be or include a SL connection which combines (or aggregates) multiple frequency bands (or carriers) into a single data channel. The connection manager 514 may be configured to establish the SL connection as a SL-U / SL-CA connection, according to the allocated resources from the base station 110 and/or core network.

In some embodiments, the connection manager 514 may be configured to establish and maintain/manage SL connections as well as other cellular (e.g., non-sidelink) connections. For example, the connection manager 514 may be configured to establish and maintain cellular connection(s) with a base station 110. The connection manager 514 may be configured to establish cellular connections with the base station 110 in a manner similar to the wireless communication links 130 described above. In some embodiments, the process in which the connection manager 514 establishes cellular connections with the base station 110 may be similar to establishing the SL connections. For example, the connection manager 514 may be configured to receive a signal broadcast by the base station 110, and establish the connection based on allocated resources from the base station 110. In some embodiments, the connection manager 514 may be configured to establish the cellular connection in a licensed frequency band. For example, the base station 110 and/or core network may allocate resources, such as a frequency band or channel(s), in the licensed frequency band for the cellular connection between the devices 502, 504 and the base station 110. The connection manager 514 may be configured to establish and/or maintain the cellular connection according to the allocated resources (e.g., maintain the cellular connection in the licensed frequency band).

In some embodiments, the connection manager 514 may be configured to establish, maintain, or otherwise co-operate multiple connections. For example, the connection manager 514 may be configured to co-operate a SL connection between the first device 502 and second device 504, and a cellular connection between the respective device 502, 504 and the base station 110. The connection manager 514 may be configured to co-operate the connections by operating, leveraging, or otherwise using the connections together (e.g., in parallel). For example, the connection manager 514 may be configured to transmit various signals / packets / PDUs via the respective connections in different frequency or time periods. In this regard, and in various instances, the connection manager 514 may be configured to leverage the cellular connection to send and/or receive data via the base station 110 from one or more remote sources, and can leverage the SL connection to send and/or receive data between the devices 502, 504 (e.g., relatively locally).

The power controller 516 may be configured to set, establish, determine, manage, or otherwise configure a transmission power of signals / PDUs / packets / transmissions sent via the respective connections. In some embodiments, the power controller 516 may be configured to configure the transmission power for SL transmissions sent on or via the SL connection between the first device 502 and second device 504. The power controller 516 may be configured to configure the transmission power for SL transmissions based on or according to a minimum transmission power. The power controller 516 may be configured to configure the transmission power for both SL transmissions and cellular transmissions (e.g., transmissions on the SL connection between the first and second devices 502, 504, and transmissions on the cellular connection between the respective device 502, 504 and the base station 110).

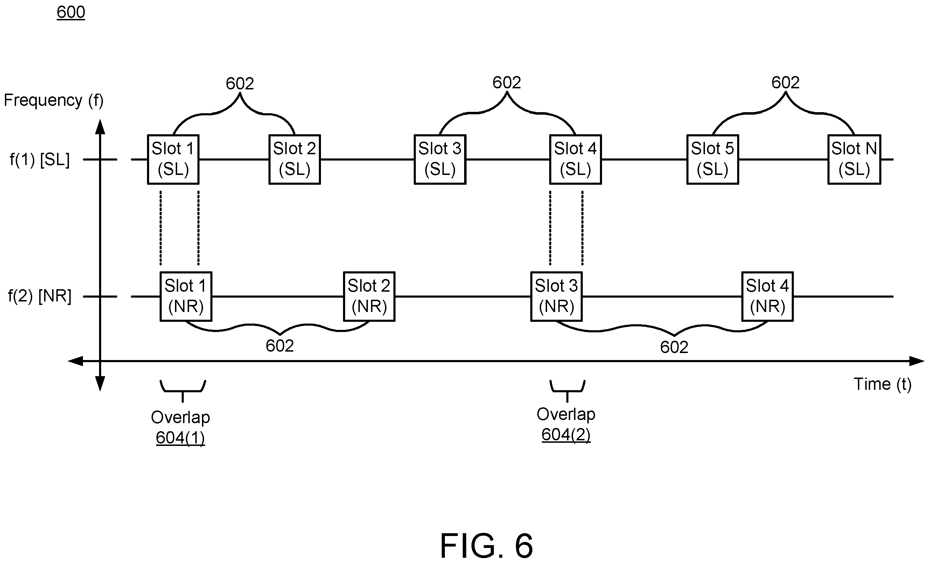

Referring to FIG. 5 and FIG. 6, depicted in FIG. 6 is a timing diagram 600 showing slots 602 for the respective connections, according to an example implementation of the present disclosure. In various embodiments, the power controller 516 may be configured to configure the transmission power for transmissions sent on both the SL and cellular connections, for instances in which the connections are being co-operated. For example, the power controller 516 may be configured to configure the transmission power for instances in which slots 602 of the connections overlap in time domain (e.g., a slot of the SL connection in which the connection manager 514 is to transmit a signal via the SL connection overlaps in time domain with a slot of the cellular connection in which the connection manager 514 is to transmit a signal via the cellular connection). Continuing the example shown in FIG. 6, in various instances, the allocated resources for the SL connection may include a plurality of slots 602 (e.g., Slot 1 (SL) - Slot N (SL)) at a first periodicity or cadence in time domain, and the allocated resources for the cellular connection may include a plurality of slots 602 (e.g., Slot 1 (NR) - Slot N (NR)) at a second periodicity or cadence in time domain. In various instances, some slots of the respective connections may overlap in time domain (e.g., overlap 604(1) for Slot 1 (SL) and Slot 1 (NR), and overlap 604(2) for Slot 4 (SL) and Slot 3 (NR)). The power controller 516 may be configured to configure the transmission power for the device 502, 504, for slots which overlap in time domain (such as overlap 604(1) and overlap 604(2)). The power controller 516 may be configured to configure the transmission power for the device 502, 504, to be greater than a minimum transmission power and less than a maximum transmission power, as described in greater detail below.

In some embodiments, the power controller 516 may be configured to set, establish, or otherwise configure a maximum transmission or output power for the device 502, 504, for an overlap 604 in time in which the connection manager 514 is co-operating the SL connection and cellular connection. For example, the power controller 516 may be configured to configure a maximum output power $P_{CMAX}(p,q)$ in a slot $p$ of the cellular connection and a slot $q$ of the SL connection that overlap in time domain. In this example, slot $p$ may be Slot 1 (NR), and slot $q$ may be Slot 1 (SL), of the timing diagram 600 of FIG. 6. The power controller 516 may be configured to configure the maximum output power $P_{CMAX}(p,q)$ to be between a lower maximum power and an upper maximum power. In other words, the power controller 516 may be configured to configure the maximum transmission power $P_{CMAX}(p,q)$, to be between a lower maximum power $P_{CMAX\_L}(p,q)$ and an upper maximum power $P_{CMAX\_H}(p,q)$ (or $P_{CMAX\_L}(p,q) \le P_{CMAX}(p,q) \le P_{CMAX\_H}(p,q)$).

The power controller 516 may be configured to determine, set, configure, or otherwise compute the maximum output power $P_{CMAX}(p,q)$ as a function of a SL transmission power and a new radio (NR) or cellular transmission power. For example, the power controller 516 may be configured to determine the maximum output power $P_{CMAX}(p,q)$ as a function of the lower maximum power $P_{CMAX\_L}(p,q)$ and the upper maximum power $P_{CMAX\_H}(p,q)$, which may be determined according to the SL transmission power and NR transmission power. The power controller 516 may be configured to compute, derive, or otherwise determine the lower maximum power, $P_{CMAX\_L}(p,q)$, and upper maximum power, $P_{CMAX\_H}(p,q)$. The power controller 516 may be configured to determine the lower maximum power, $P_{CMAX\_L}(p,q)$, and upper maximum power, $P_{CMAX\_H}(p,q)$, according to Formula 1 and Formula 2, below:

$$P_{CMAX\_L}(p,q) = MIN\ \{10\log_{10}\ [p_{CMAX\_L,c,NR}(p) + p_{CMAX\_L,c,SL}(q)],\ P_{PowerClass\_CA},\ P_{EMAX,CA}\}\quad F.\ 1$$

$$P_{CMAX\_H}(p,q) = MIN\ \{10\log_{10}\ [p_{CMAX\_H,c,NR}(p) + p_{CMAX\_H,c,SL}(q)],\ P_{PowerClass\_CA},\ P_{EMAX,CA}\}\quad F.\ 2$$

where $p_{CMAX\_L,c,NR}$ and $p_{CMAX\_L,c,SL}$ are the respective limits $P_{CMAX\_L,c,NR}(p)$ and $P_{CMAX\_L,c,SL}(q)$, and the $p_{CMAX\_H,c,NR}$ and $p_{CMAX\_H,c,SL}$ are the respective limits $P_{CMAX\_H,c,NR}(p)$ and $P_{CMAX\_H,c,SL}(q)$. The $p_{CMAX\_L,c,NR}$ and $p_{CMAX\_L,c,SL}$ may be the respective limits $P_{CMAX\_L,c,NR}(p)$ and $P_{CMAX\_L,c,SL}(q)$ expressed in linear scale. Similarly, the $p_{CMAX\_H,c,NR}$ and $p_{CMAX\_H,c,SL}$ are the respective limits $P_{CMAX\_H,c,NR}(p)$ and $P_{CMAX\_H,c,SL}(q)$ expressed in linear scale. Subscripts $_{NR}$ and $_{SL}$ refer to respective limits or maximum power for cellular (i.e., NR) and sidelink (i.e., SL) connections, respectively.

Referring still to FIG. 5 and FIG. 6, the first device 502 and/or second device 504 may be configured to communicate, send, provide, or otherwise transmit various transmissions according to the configured transmission power. For example, the connection manager 514 may be configured to receive the configured transmission power for a particular slot from the power controller 516. The connection manager 514 may be configured to transmit, e.g., via the wireless interface 510, transmissions in the corresponding slots to a target device or endpoint, according to the configured transmission power for the slot set / determined / configured by the power controller 516. In instances in which slots of the respective connections overlap, the connection manager 514 may be configured to transmit SL and NR transmissions, via the respective SL and cellular connections, according to the configured transmission power set for such overlapping slots by the power controller 516. For example, the connection manager 514 may be configured to transmit the SL and NR transmissions according to the configured transmission power (e.g., a maximum transmission power of the device 502, 504), which is greater than a minimum transmission power and less than a maximum transmission power. In this regard, the power controller 516 may be configured to set the respective transmission power for both connections, such that the total output power by the device 502, 504 is between the minimum and maximum transmission powers.

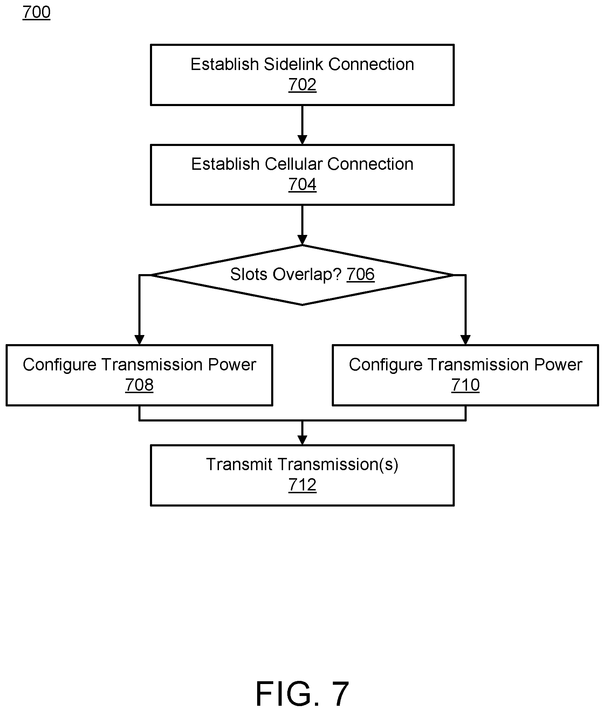

Referring now to FIG. 7, depicted is a flow chart showing an example method 700 for wireless sidelink operations, according to an example implementation of the present disclosure. The method 700 may be executed or performed by the devices, components, elements, or hardware described above with reference to FIG. 1 - FIG. 6. As a brief overview, at step 702, a first device may establish a sidelink connection. At step 704, the first device may establish a cellular connection. At step 706, the first device may determine if two slots overlap. At step 708 and step 710, the first device may configure the transmission power. At step 712, the first device may transmit transmissions.

At step 702, a first device may establish a sidelink (SL) connection. In some embodiments, the first device may generate, create, or otherwise establish a SL connection between the first device and the second device. The first device may establish the SL connection between the first device and the second device, to exchange, transmit, receive, or otherwise share data / information / packets / messages / transmissions between the first device and the second device (e.g., locally). In this regard, the SL connection may be a device-to-device (D2D) connection. The first device may establish the SL connection responsive to a message / beacon / frame / signal broadcast by one of the first device and the second device. For example, one of the devices may advertise its presence by broadcasting an advertising signal to nearby devices. The other device may receive or otherwise detect the advertising signal, and the devices may establish the SL connection responsive thereto.

The first device may establish the SL connection according to resources allocated by the core network. For example, as part of establishing the SL connection, the core network may allocate certain resources (such as certain frequency bands or ranges, a slot schedule, etc.) to devices operating / managing / maintaining / establishing a SL connection. The first device may establish the SL connection between the first device and the second device, according to the allocated resources. For example, the core network may allocate resources in the unlicensed frequency band, allocate resources across a plurality of frequency band (e.g., for carrier aggregation), etc. The first device may establish the SL connection according to the allocated resources. Continuing the above example, the first device may establish the SL connection as an unlicensed SL connection (e.g., SL-U connection) and/or a carrier aggregation SL connection (e.g., SL-CA connection), according to allocated resources from the core network.

At step 704, the first device may establish a cellular connection. In some embodiments, the first device may generate, create, or otherwise establish a cellular connection between the first device and a base station. The cellular connection may be or include a new radio (NR) cellular connection. The first device may establish the cellular connection with a base station in cellular range of the first device. The first device may establish the cellular connection, to exchange, transmit, receive, or otherwise share data / information / packets / messages / transmissions between the first device and one or more endpoints (e.g., via the cellular network). The first device may establish the cellular connection according to allocated resources set / established / determined by the core network. Similar to resources allocated by the core network for the SL connection, the core network may set or establish certain allocated resources for the cellular connection (such as, for instance, frequency band or ranges, a slot schedule, etc.). The first device may establish the cellular connection according to the allocated resources. For example, where the core network allocates resources including a frequency band in the licensed frequency band, the first device may establish the cellular connection according to those allocated resources. In other words, in various instances, the first device may establish the cellular connection in the licensed frequency band.

At step 706, the first device may determine if two slots overlap. In some embodiments, the first device may determine, detect, or otherwise identify one or more slots of the SL connection which overlap (e.g., in time domain) one or more slots of the cellular connection. The first device may identify a slot schedule for the SL connection, based on the allocated resources for the SL connection set as part of establishing the SL connection (e.g., at step 702). Similarly, the first device may identify a slot schedule for the cellular connection, based on the allocated resources for the cellular connection set as part of establishing the cellular connection (e.g., at step 704). The first device may identify whether any slots of the slot schedule for the SL connection overlap with any slots for the cellular connection in time domain. Where the first device identifies one or more overlapping slots (e.g., in time domain), the method 700 may proceed to step 708. Where the first device does not identify any overlapping slots, the method 700 may proceed to step 710.

At step 708 and step 710, the first device may configure the transmission power. More specifically, at step 708, where the first device identifies one or more overlapping slots in time domain, the first device may configure the transmission power for a wireless SL transmission of the SL connection to be greater than a minimum transmission power. In some embodiments, where at step 710, the first device does not identify one or more overlapping slots in time domain, the first device may configure the transmission power for the wireless SL transmission of the SL connection to be equal to or less than a maximum transmission power.

In some embodiments, at step 708, the first device may configure the transmission power for the first device (e.g., the total or maximum output power) to be between a lower (or minimum) transmission power and an upper (or maximum) transmission power. The first device may determine the lower transmission power and the upper transmission power according to Formula 1 and Formula 2 described above. The first device may compute or otherwise determine the maximum output power of the first device, according to or as a function of a SL transmission power (e.g., a transmission power to be used for transmitting SL transmissions) and a NR transmission power (e.g., a transmission power to be used for transmitting cellular, or NR, transmissions). The first device may determine or otherwise configure the transmission power for the first device to between the upper and lower transmission powers, for slot(s) of the cellular and SL connections which overlap in time domain.

At step 712, the first device may perform/transmit transmissions. In some embodiments, the first device may communicate, send, provide, or otherwise transmit wireless SL transmissions and cellular (NR) transmissions. The first device may transmit the wireless SL transmissions and cellular transmissions, according to the configured transmission power. In some embodiments, where the first device is co-operating (e.g., in parallel or concurrently operating or using) the cellular and SL connections, and where two slots of the respective connections overlap in time domain, the first device may transmit a wireless SL transmission according to a configured SL transmission power on the SL connection and transmit a wireless cellular transmission according to a configured NR transmission on the cellular connection (e.g., in the respective overlapping slots). The first device may transmit the wireless SL transmission, according to the configured transmission power, to the second device via the SL connection. The first device may transmit the wireless cellular transmission, according to the configured transmission power, to an endpoint via the base station using the cellular connection.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure, as defined by the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

**Claims**

1. A method, comprising:

   configuring, by a first wireless communication device, a transmission power for a wireless sidelink (SL) transmission of a SL connection with a second wireless communication device, the transmission power configured to be greater than a minimum transmission power; and
   transmitting, by the first wireless communication device, the wireless SL transmission to the second wireless communication device according to the configured transmission power.

2. The method of claim 1, wherein the SL connection is at least one of a SL-unlicensed (SL-U) or a SL-carrier aggregation (SL-CA) connection.

3. The method of claim 1 or 2, wherein the transmission power comprises a SL transmission power, and wherein a maximum output power of the first wireless communication device is a function of the SL transmission power and a new radio (NR) transmission power.

4. The method of any of claims 1 to 3, wherein the first wireless communication device comprises a reduced capability device.

5. The method of any preceding claim, wherein the first wireless communication device configures the transmission power to be greater than the minimum transmission power and less than a maximum transmission power; and optionally,
   wherein the first wireless communication device transmits the SL transmission to the second wireless communication device at the transmission power, which is less than the maximum transmission power.

6. The method of any preceding claim, wherein one of the first wireless communication device or the second wireless communication device comprises a vehicle, and another one of the first wireless communication device or the second wireless communication device comprises a user device of a pedestrian.

7. The method of any preceding claim, further comprising establishing, by the first wireless communication device, the SL connection with the second wireless communication device, in an unlicensed frequency band.

8. The method of claim 8, further comprising establishing, by the first wireless communication device, a cellular connection with a base station in a licensed frequency band, wherein the first wireless communication device co-operates the SL connection in the unlicensed frequency band and the cellular connection in the licensed frequency band; and/or
   wherein configuring the transmission power for the wireless SL transmission comprises:
   configuring, by the first wireless communication device, a maximum output power of the first wireless communication device, to be between a lower transmission power and an upper transmission power, for a first slot of the SL connection which overlaps, in time domain, with a second slot of the cellular connection.

9. A first device, comprising:

   a transceiver; and
   one or more processors configured to:

   configure a transmission power for a wireless sidelink (SL) transmission of a SL connection with a second device, the transmission power configured to be greater than a minimum transmission power; and
   transmit, via the transceiver, the wireless SL transmission to the second device according to the configured transmission power.

10. The first device of claim 9, wherein the SL connection is at least one of a SL-unlicensed (SL-U) or a SL-carrier aggregation (SL-CA) connection; and/or
    wherein the transmission power comprises a SL transmission power, and wherein a maximum output power of the wireless communication device is a function of the SL transmission power and a new radio (NR) transmission power.

11. The first device of claim 9 or 10, wherein the first device comprises a reduced capability device.

12. The first device of any of claims 9 to 11, wherein the one or more processors configure the transmission power to be greater than the minimum transmission power and less than a maximum transmission power; and optionally, wherein the one or more processors transmit the SL transmission to the second device at the transmission power, which is less than the maximum transmission power.

13. The first device of any of claims 9 to 12, wherein one of the first device or the second device comprises a vehicle, and another one of the first device or the second device comprises a user device of a pedestrian.

14. The first device of any of claims 9 to 13, wherein the one or more processors are further configured to establish, via the transceiver, the SL connection with the second device, in an unlicensed frequency band.

15. The first device of any of claims 9 to 14, wherein the one or more processors are further configured to establish, via the transceiver, a cellular connection with a base station, wherein the first device co-operates the SL connection in the unlicensed frequency band and the cellular connection in the licensed frequency band; and optionally, wherein the first device configures a maximum output power of the first wireless communication device, to be between a lower transmission power and an upper transmission power, for a first slot of the SL connection which overlaps, in time domain, with a second slot of the cellular connection.

100

FIG. 1

200

Console
210

Wireless Interface
215

Processor
230

Head Wearable Display
250

Sensors
255

Wireless Interface
265

Processor
270

Electronic Display
275

Lens
280

Compensator
285

FIG. 2

250

FIG. 3

Computing System 414

| Network Interface 420 | Processing Unit(s) 416 | Storage 418 |
| --- | --- | --- |

| User Input Device 422 | User Output Device 424 |
| --- | --- |

# FIG. 4

500

Base
Station
110

**First Device**
**502**

Processor(s) 506

Memory 508

Processing Engine(s) 512

Connection Manager
514

Power Controller 516

Wireless Interface 510

SL

**Second Device**
**504**

Processor(s) 506

Memory 508

Processing Engine(s) 512

Connection Manager
514

Power Controller 516

Wireless Interface 510

# FIG. 5

EP 4 492 877 A1

FIG. 6

700

```
┌─────────────────────────────────┐
│   Establish Sidelink Connection │
│             702                 │
└─────────────────────────────────┘
              │
              ▼
┌─────────────────────────────────┐
│   Establish Cellular Connection │
│             704                 │
└─────────────────────────────────┘
              │
              ▼
         ◇ Slots Overlap? 706 ◇
         │                   │
         ▼                   ▼
┌──────────────────────┐  ┌──────────────────────┐
│ Configure            │  │ Configure            │
│ Transmission Power   │  │ Transmission Power   │
│        708           │  │        710           │
└──────────────────────┘  └──────────────────────┘
              │
              ▼
┌─────────────────────────────────┐
│    Transmit Transmission(s)     │
│             712                 │
└─────────────────────────────────┘
```

# FIG. 7

Europäisches Patentamt

European Patent Office

Office européen des brevets

# EUROPEAN SEARCH REPORT

Application Number

EP 24 17 9198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/065892 A1 (HUAWEI TECH CO LTD [CN]) 27 April 2023 (2023-04-27) <br> * figures 1-6 * <br> -& US 2024/276526 A1 (LIU YE [CN] ET AL) 15 August 2024 (2024-08-15) <br> * paragraph [0101] - paragraph [0305]; figures 1-6 * | 1-15 | INV. <br> H04W52/36 <br> H04W4/40 <br> H04W52/38 <br> H04W76/14 <br> H04W92/18 |
| X | JINQIANG XING ET AL: "R18 SL-U concurrent operation", <br> 3GPP DRAFT; R4-2308988; TYPE PCR; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG4, no. Incheon, KR; 20230522 - 20230526 <br> 15 May 2023 (2023-05-15), XP052317792, <br> Retrieved from the Internet: <br> URL:https://www.3gpp.org/ftp/TSG_RAN/WG4_R adio/TSGR4_107/Docs/R4-2308988.zip <br> R4-2308988 [e-SL] R18 SL-U concurrent operation.docx <br> [retrieved on 2023-05-15] <br> * the whole document * | 1-15 | |

TECHNICAL FIELDS SEARCHED (IPC)

H04W

The present search report has been drawn up for all claims

| Place of search | Date of completion of the search | Examiner |
|---|---|---|
| The Hague | 8 November 2024 | Tejera, Pedro |

## ANNEX TO THE EUROPEAN SEARCH REPORT
## ON EUROPEAN PATENT APPLICATION NO.

EP 24 17 9198

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | Publication date | Patent family member(s) | | Publication date |
|---|---|---|---|---|
| WO 2023065892 A1 | 27-04-2023 | AU | 2022370958 A1 | 16-05-2024 |
| | | CA | 3236158 A1 | 27-04-2023 |
| | | CN | 116017664 A | 25-04-2023 |
| | | EP | 4422292 A1 | 28-08-2024 |
| | | JP | 2024540992 A | 06-11-2024 |
| | | KR | 20240090791 A | 21-06-2024 |
| | | US | 2024276526 A1 | 15-08-2024 |
| | | WO | 2023065892 A1 | 27-04-2023 |
| US 2024276526 A1 | 15-08-2024 | AU | 2022370958 A1 | 16-05-2024 |
| | | CA | 3236158 A1 | 27-04-2023 |
| | | CN | 116017664 A | 25-04-2023 |
| | | EP | 4422292 A1 | 28-08-2024 |
| | | JP | 2024540992 A | 06-11-2024 |
| | | KR | 20240090791 A | 21-06-2024 |
| | | US | 2024276526 A1 | 15-08-2024 |
| | | WO | 2023065892 A1 | 27-04-2023 |

EPO FORM P0459

For more details about this annex : see Official Journal of the European Patent Office, No. 12/82